# EUROPEAN PATENT APPLICATION

(11) **EP 4 432 178 A1**
(43) Date of publication of application: **18.09.2024**
(21) Application number: 24163440.1
(22) Date of filing: 14.03.2024
(51) Int. Cl.: G06Q 10/04, G06Q 10/06, G06Q 50/10

(54) **CREATIVE RECOVERY OPTIMIZATION SYSTEM, FOR THE CONVERSION OF OLD/WASTE PRODUCTS INTO NEW PRODUCTS**

(30) Priority: 14.03.2023 IT 202300004704
(71) Applicant: Regenesi S.r.l., 40124 Bologna (IT)
(72) Inventor: PAZZI, Maria Silvia, 48123 Ravenna (IT)
(74) Representative: Modiano, Micaela Nadia

(57) **Abstract**

A creative recovery optimization system, for the conversion of old/waste products into new products, comprising:
means adapted to acquire quantitative information about available waste (3);
means adapted to define, by means of a plurality of optical sensors (2), the type of materials, associating types and quantities of the waste (3);
means adapted to acquire the creative recovery product expectations on the part of a customer/user;
processing means adapted to generate alternative proposals for the customer/user in terms of costs, aesthetics and functionality of a product;
means adapted to submit said alternative proposals to the customer/user;
means adapted to generate visual renderings in order to help the customer/user in the decision to choose said alternative proposals;
means adapted to extend the self-learning ability of customer/user responses by means of an artificial intelligence system.

## Description

The present invention relates to a creative recovery optimization system, for the conversion of old/waste products into new products.

More particularly, the invention relates to a creative recovery optimization system and method for converting discarded or end-of-life products into new products. The invention is applied particularly, but not exclusively, in the field of converting old/waste products into new products for fashion accessories, home textiles, novelty items, design and the like.

As is known, creative recovery or upcycling comprises a series of processes by which old, discarded or end-of-life products are recovered and converted into new products that may also have different functionalities with respect to the initial, high-value product.

The creative recovery process allows to minimize waste from industrial production, converting it into new products with also new functionalities, according to circular economy and eco-design logics.

The products obtained from creative recovery, before being industrialized, are shown to the user, thanks to rendering techniques, so as to present the end product that could be obtained with the processing waste (old/end-of-life products) that the user has available.

The creative recovery process currently relies on a series of steps that are unrelated to each other, since they are digitized only in the individual steps but not in the overall process.

Moreover, known creative recovery processes are unable to submit alternative creative recovery solutions to the user on the basis of available business waste according to eco-design logics and principles, nor are they able to submit different aesthetic, functional, and economic options for providing fashion accessories, home textiles, novelty items, and design in general.

Creative recovery processes of the known type are substantially unable to base the creation of new products starting from old/waste products in an automated way.

The aim of the present invention is to provide a creative recovery system, for the conversion of old/end-of-life products, into new products, which allows to automate the entire process, benefiting the final yield.

Within the scope of this aim, an object of the present invention is to provide a creative recovery optimization system which allows, based on the usable waste, to provide alternative creative recovery solutions according to logics and principles of eco-design.

Another object of the present invention is to provide a creative recovery optimization system that speeds up the time-to-market of products in creative recovery.

A further object of the present invention is to provide a creative recovery optimization system that allows to radically lower the cost of design, which is necessary even for small batches of products.

A further object of the present invention is to provide a creative recovery optimization system that allows to submit alternatives, in terms of cost as well as functional and aesthetic ones, to a company wishing to start a creative recovery process.

Another object of the present invention is to provide a creative recovery process.

Not least object of the present invention is to provide a creative recovery system and process that are highly reliable, relatively easy to provide, and at competitive costs.

This aim, as well as these and other objects that will become better apparent hereinafter, are achieved by a creative recovery optimization system, for the conversion of old/waste products into new products, characterized in that it comprises:
means adapted to acquire quantitative information about available waste;
means adapted to define, by means of a plurality of optical sensors, the type of materials, associating types and quantities of the waste;
means adapted to acquire the creative recovery product expectations on the part of a customer/user;
processing means adapted to generate alternative proposals for the customer/user in terms of costs, aesthetics and functionality of a product;
means adapted to submit said alternative proposals to the customer/user;
means adapted to generate visual renderings in order to help the customer/user in the decision to choose said alternative proposals;
means adapted to extend the self-learning ability of customer/user responses by means of an artificial intelligence system.

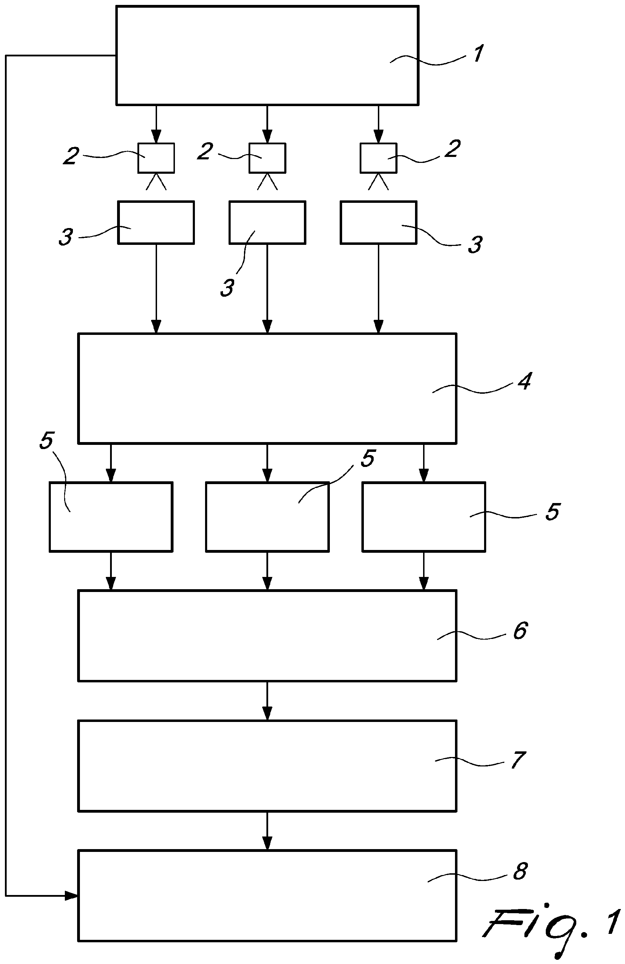

Further characteristics and advantages of the invention will become better apparent from the description of a preferred, but not exclusive, embodiment of the creative recovery optimization system/process according to the present invention, illustrated by way of non-limiting example in the accompanying drawing, wherein Figure 1 is a view, in the form of a flowchart, of the process according to the present invention.

With reference to the figure, the creative recovery optimization system, according to the present invention, comprises:
means adapted to acquire quantitative information about available waste;
means adapted to define, by means of a plurality of optical sensors, the type of materials, associating types and quantities of the waste;
means adapted to acquire the creative recovery product expectations on the part of a customer/user;
processing means adapted to generate alternative proposals for the customer/user in terms of costs, aesthetics and functionality of a product;
means adapted to submit said alternative proposals to the customer/user;
means adapted to generate visual renderings in order to help the customer/user in the decision to choose said alternative proposals;
means adapted to extend the self-learning ability of customer/user responses by means of an artificial intelligence system.

The definition of creative retrieval optimization system shown in the present description may be understood as a generic infrastructure, facility, digital platform and combinations thereof. In particular, the system according to the invention may be identified as an infrastructure, a facility, a digital platform assigned to planning incentives to a circular economy involving the reuse of old/waste products according to a circular economy vision.

The creative recovery optimization process for converting old/waste products into new products, according to the present invention, comprises a step 1 of acquiring quantitative information about the waste that may be available. This step of acquisition can also occur in a non-homogeneous manner, i.e. by means of printouts, files of different kinds, sampling, inventories, etcetera.

Step 1 of acquiring quantitative information about the waste thus makes it possible to have the volume of waste that may be available, in order to be able to estimate from this volume how many new products can be provided.

The process continues with a step in which multiple sensors 2 are provided in order to define the type of materials present in the waste 3 that is available.

Basically, in this step, the sensors 2 of the optical type allow, even in the absence of data sheets related to the waste 3, to define the type of materials by associating the type and quantity of the waste 3.

This is then followed by step 4, in which the customer enters the expectations of the product obtainable with creative recovery.

In this step, the customer/user defines the type of product they expect to be able to provide from the waste 3 previously analyzed.

This is followed by a step 5 in which alternative proposals in terms of costs, aesthetics, and functionality are generated by means of a constraint programming scheme.

This is followed by a step of proposing the alternative solutions generated in step 5, step 6, in which solutions are thus submitted to the user for reuse (i.e., creative recovery), or recycling, or sale on the secondary waste market, and, in the case of creative recovery, proposals in the form of extended reality of different types of objects that can be provided from the waste analyzed in the previous steps.

This is followed by a step of visualization of the proposals submitted to the user in order to help the user/customer in decision making. Said step 7 provides for the generation of visual renderings, such as computer rendering, augmented reality, or digital twin.

Finally, by means of an artificial intelligence algorithm, step 8, an ability to self-learning the answers provided by the customer/user is developed in order to automate feasibility analysis starting, in input, from the customer's need and the type of waste he/she has available (in terms of size type and quantity), thus being able to work even in the physical absence of the material itself, thus being able to anticipate to the customer/user what he/she will be able to obtain with the waste he/she will have available.

The invention also relates to a computer program adapted to provide the creative recovery process described above.

In practice, it has been found that the invention fully achieves the intended aim and objects, since it allows to facilitate the growth of creative recovery by allowing a user/customer to know in advance, on the basis of the type and quantity of waste he or she may have available, what new products he or she may obtain, thus allowing to choose. The choice made by the customer/user can be processed by means of an artificial intelligence algorithm to automate the feasibility analysis of the conversion into a given product.

The system and process according to the present invention allow faster time-to-market for products in creative recovery, radically lowering the cost of design and proposing cost alternatives to those running a company that seeks to start a creative recovery process.

The system and process thus conceived are susceptible of numerous modifications and variations, all of which are within the scope of the accompanying claims.

All the details may furthermore be replaced with other technically equivalent elements.

The disclosures in Italian Patent Application No. 102023000004704, from which this application claims priority, are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A creative recovery optimization system, for the conversion of old/waste products into new products, **characterized in that** it comprises:
means adapted to acquire quantitative information about available waste (3);
means adapted to define, by means of a plurality of optical sensors (2), the type of materials, associating types and quantities of the waste (3);
means adapted to acquire the creative recovery product expectations on the part of a customer/user;
processing means adapted to generate alternative proposals for the customer/user in terms of costs, aesthetics and functionality of a product;
means adapted to submit said alternative proposals to the customer/user;
means adapted to generate visual renderings in order to help the customer/user in the decision to choose said alternative proposals;
means adapted to extend the self-learning ability of customer/user responses by means of an artificial intelligence system.

2. A creative recovery optimization method, for the conversion of old/waste products into new products, **characterized in that** it comprises the steps of:
acquiring (1) quantitative information regarding available waste;
defining, by means of a plurality of optical sensors (2), the type of materials, associating types and quantities of the waste (3);
acquiring (4) the creative recovery product expectations on the part of a customer/user;
generating (5) alternative proposals for the customer/user in terms of costs, aesthetics and functionality of a product;
submitting (6) said alternative proposals to the customer/user;
generating (7) visual renderings in order to help the customer/user in the decision to choose said alternative proposals;
by means of self-learning algorithms (8), extending the ability to self-learn customer/user responses by means of an artificial intelligence system.

3. The method according to claim 2, **characterized in that** said step (1) of acquiring quantitative information of the waste is carried out by means of printouts, files, samples, stock, etcetera.

4. The method according to claim 2 or 3, **characterized in that** said step (5) of generating alternative proposals is carried out by means of a constraint programming system.

5. The method according to one or more of claims 2-4, **characterized in that** said visual rendering processing step (7) is performed by rendering, augmented reality or digital twin.

6. The method according to one or more of claims 2-5, **characterized in that** said step (8) of extending self-learning capabilities of the responses by means of an artificial intelligence system receives as input the customer's requirement and the data of his waste in terms of type, size and quantity.

7. A computer comprising means configured to perform the steps of the method according to any one of claims 2 to 6.

8. A computer program comprising instructions which, when the program is executed by a computer, cause the computer to perform the steps of the method according to any one of claims 2 to 6.

9. A computer-readable memory medium comprising instructions which, when the instructions are executed by a computer, cause the computer to perform the steps of the method according to any one of claims 2 to 6.
